# EUROPÄISCHE PATENTSCHRIFT

(11) **EP 3 701 576 B1**
(45) Veröffentlichungstag und Bekanntmachung des Hinweises auf die Patenterteilung: **23.02.2022**
(21) Anmeldenummer: 18789342.5
(22) Anmeldetag: 10.10.2018
(51) Int. Cl.: H01M 10/052, H01M 10/0562, H01M 10/0585, H01M 4/38

(54) **LITHIUMFESTKÖRPERBATTERIE UND VERFAHREN ZUM HERSTELLEN EINER LITHIUMFESTKÖRPERBATTERIE**
SOLID ELECTROLYTE LITHIUM BATTERY AND METHOD FOR ITS MANUFACTURE
BATTERIE AU LITHIUM AVEC UN ÉLECTROLYTE SOLIDE ET SON PROCÉDÉ DE FABRICATION

(30) Priorität: 25.10.2017 DE 102017219170
(43) Veröffentlichungstag der Anmeldung: 02.09.2020
(73) Patentinhaber: Robert Bosch GmbH, 70442 Stuttgart (DE)
(72) Erfinder: KERKAMM, Ingo, 70565 Stuttgart-Rohr (DE); KUNZ, Lothar, 29223 Celle (DE); HUPFER, Thomas, 71263 Weil Der Stadt (DE)
(86) Internationale Anmeldenummer: PCT/EP2018/077590
(87) Internationale Veröffentlichungsnummer: WO 2019/081209

(56) Entgegenhaltungen:
- EP-A1- 1 093 672
- US-A1- 2007 117 007
- US-A1- 2016 190 640

## Beschreibung

### Gebiet der Erfindung

Die Erfindung betrifft eine Lithiumfestkörperbatterie und ein Verfahren zum Herstellen einer Lithiumfestkörperbatterie.

### Stand der Technik

Lithiumfestkörperbatterien, die sekundäre Batterien sind, weisen hohe Energiedichten (> 400 Wh/Kg) auf, wenn z.B. pures Lithiummetall als Anodenmaterial verwendet wird. Die Klasse der sulfidischen bzw. schwefelbasierten Festkörperelektrolyten bietet eine hohe lonenleitfähigkeit, aber es können, insbesondere bei hohen Ladedichten, Dendriten durch den Separator wachsen. Dendriten, die durch den Separator wachsen, können zu Kurzschlüssen zwischen der Anoden und der Kathode der Batterie führen. Somit ist die Ladedichte der Lithiumfestkörperbatterien begrenzt.

Die US 2016/285064, die EP1093672 A1, die US 2016/344035 und die US 2013/017432 beschreiben Batterien gemäß dem Stand der Technik.

Separatoren, die ein Dendritenwachstum durch den Separator vermindern bzw. verhindern, sind bekannt, jedoch sind die Separatoren in ausreichender Schichtdicke nur sehr aufwändig und teuer herzustellen, so dass die Festköper-Lithiumbatterie sehr teuer ist.

### Offenbarung der Erfindung

### Vorteile der Erfindung

Ausführungsformen der vorliegenden Erfindung können in vorteilhafter Weise eine Lithiumfestkörperbatterie ermöglichen bzw. ermöglichen, eine Lithiumfestkörperbatterie herzustellen, die mit besonders hohen Ladedichten geladen werden kann, ohne dass Dendriten durch den Separator wachsen.

Gemäß einem ersten Aspekt der Erfindung wird eine Lithiumfestkörperbatterie vorgeschlagen, umfassend eine Lithiumanode, eine Kathode, eine erste Separatorschicht zum elektrischen Trennen der Lithiumanode von der Kathode, wobei die erste Separatorschicht einen sulfidischen Festkörperelektrolyt umfasst, und eine zweite Separatorschicht zum elektrischen Trennen der Lithiumanode von der Kathode, wobei die die zweite Separatorschicht zwischen der ersten Separatorschicht und der Lithiumanode angeordnet ist und die zweite Separatorschicht einen sulfidischen Festkörperelektrolyt umfasst, wobei die erste Separatorschicht zwischen der Kathode und der zweiten Separatorschicht angeordnet ist und eine größere Schichtdicke als die zweite Separatorschicht aufweist, insbesondere die erste Separatorschicht eine mindestens doppelt so große Schichtdicke wie die zweite Separatorschicht aufweist, vorzugsweise die erste Separatorschicht eine mindestens zehnmal so große Schichtdicke wie die zweite Separatorschicht aufweist, wobei die Porosität der zweiten Separatorschicht in einem Bereich von ca. 0% bis ca. 4%, vorzugsweise in einem Bereich von ca. 0% bis ca. 3%, besonders vorzugsweise in einem Bereich von ca. 0% bis ca. 1%, liegt.

Ein Vorteil hiervon ist, dass die Lithiumfestkörperbatterie in der Regel mit besonders hohen Ladedichten (> 3C = 60/3, d.h. die Lithiumfestkörperbatterie kann innerhalb von 20 Minuten vollständig geladen werden) geladen werden kann, ohne dass Dendriten durch die Separatorschichten wachsen. Durch die geringe Porosität der zweiten Separatorschicht wird üblicherweise ein Dendritenwachstum sicher verhindert. Darüber hinaus ist im Allgemeinen die Lithiumfestkörperbatterie besonders kostengünstig und technisch einfach herstellbar, da sich die Gesamtdicke der Separatorschicht aus zwei Schichtdicken, nämlich der ersten Separatorschicht und der zweiten Separatorschicht, zusammensetzt. Insbesondere ist in der Regel die Lithiumfestkörperbatterie kostengünstig und technisch einfach ausgebildet, da die zweite Separatorschicht dünner als die erste Separatorschicht ausgebildet ist. Somit ist üblicherweise die Lithium-Festkörperbatterie auch dann kostengünstig, wenn die zweite Separatorschicht relativ teuer bzw. technisch aufwendig ist.

Gemäß einem zweiten Aspekt der Erfindung wird ein Verfahren zum Herstellen einer Lithiumfestkörperbatterie vorgeschlagen, wobei das Verfahren folgende Schritte umfasst: Bereitstellen einer Lithiumanode; Bereitstellen einer Kathode; Anordnen einer ersten Separatorschicht zum elektrischen Trennen der Lithiumanode von der Kathode derart, dass die erste Separatorschicht bei der fertig hergestellten Lithiumfestkörperbatterie zwischen der Lithiumanode und der Kathode angeordnet ist, wobei die erste Separatorschicht einen sulfidischen Festkörperelektrolyt umfasst; und Anordnen einer zweiten Separatorschicht zum elektrischen Trennen der Lithiumanode von der Kathode derart, dass die die zweite Separatorschicht bei der fertig hergestellten Lithiumfestkörperbatterie zwischen der ersten Separatorschicht und der Lithiumanode angeordnet ist, wobei die zweite Separatorschicht einen sulfidischen Festkörperelektrolyt umfasst, wobei die erste Separatorschicht eine größere Schichtdicke als die zweite Separatorschicht aufweist, insbesondere die erste Separatorschicht eine mindestens doppelt so große Schichtdicke wie die zweite Separatorschicht aufweist, vorzugsweise die erste Separatorschicht eine mindestens zehnmal so große Schichtdicke wie die zweite Separatorschicht aufweist, wobei die Porosität der zweiten Separatorschicht in einem Bereich von ca. 0% bis ca. 4%, vorzugsweise in einem Bereich von ca. 0% bis ca. 3%, besonders vorzugsweise in einem Bereich von ca. 0% bis ca. 1%, liegt.

Vorteilhaft hieran ist, dass im Allgemeinen eine Lithiumfestkörperbatterie, die mit besonders hohen Ladedichten (>3C = 60/3, d.h. die Lithiumfestkörperbatterie kann innerhalb von 20 Minuten vollständig geladen werden) geladen werden kann, ohne dass Dendriten durch die Separatorschichten wachsen, hergestellt wird bzw. werden kann. Durch die geringe Porosität der zweiten Separatorschicht wird üblicherweise ein Dendritenwachstum bei der hergestellten Lithiumfestkörperbatterie sicher verhindert. Darüber hinaus kann in der Regel die Lithiumfestkörperbatterie besonders kostengünstig und technisch einfach hergestellt werden, da sich die Gesamtdicke der Separatorschicht aus zwei Schichtdicken, nämlich der ersten Separatorschicht und der zweiten Separatorschicht, zusammensetzt. Insbesondere ist im Allgemeinen die Lithiumfestkörperbatterie kostengünstig und technisch einfach herstellbar, da die zweite Separatorschicht dünner als die erste Separatorschicht ausgebildet ist. Somit kann die Lithium-Festkörperbatterie üblicherweise auch dann kostengünstig hergestellt werden, wenn die zweite Separatorschicht relativ teuer bzw. technisch aufwendig herzustellen ist.

Ideen zu Ausführungsformen der vorliegenden Erfindung können unter anderem als auf den nachfolgend beschriebenen Gedanken und Erkenntnissen beruhend angesehen werden.

Gemäß einer Ausführungsform weist die erste Separatorschicht eine Schichtdicke im Bereich von ca. 1 µm bis ca. 40 µm, insbesondere im Bereich von ca. 2 µm bis ca. 30 µm, vorzugsweise im Bereich von ca. 5 µm bis ca. 30 µm, auf, und die zweite Separatorschicht weist eine Schichtdicke im Bereich von ca. 0,2 µm bis ca. 5 µm auf. Vorteilhaft hieran ist, dass die erste Separatorschicht üblicherweise als mechanischer Träger bzw. Backbone der zweiten Separatorschicht dient bzw. dienen kann. Hierdurch kann die zweite Separatorschicht in der Regel besonders dünn ausgebildet sein. Die erste Separatorschicht kann im Allgemeinen flexibel bzw. biegbar ausgebildet sein.

Gemäß einer Ausführungsform weist die erste Separatorschicht eine Porosität im Bereich von ca. 5% bis ca. 20%, insbesondere im Bereich von ca. 5% bis ca. 10%, auf. Hierdurch kann die erste Separatorschicht üblicherweise technisch besonders einfach ausgebildet sein. Dies senkt in der Regel die Herstellungskosten der Lithiumfestkörperbatterie.

Gemäß einer Ausführungsform ist die zweite Separatorschicht zur Verbesserung der elektrochemischen Stabilität gegenüber der Lithiumanode mit Halogenidionen dotiert. Hierdurch ist die Langlebigkeit der Lithiumfestkörperbatterie üblicherweise verbessert, da ein Verschlechtern bzw. eine chemische Veränderung der zweiten Separatorschicht verhindert oder zumindest vermindert wird.

Gemäß einer Ausführungsform umfasst die Kathode einen sulfidischen Festkörperelektrolyt. Ein Vorteil hiervon ist, dass die Kathode im Allgemeinen technisch einfach und kostengünstig ausgebildet sein kann. Dies senkt die Herstellungskosten der Lithiumfestkörperbatterie. Ein sulfidischer Festkörperelektrolyt kann insbesondere Glas (Li₂S/P₂S₅ (70/30 - 80/20)), Glaskeramik (Li₂S/P₂S₅ mit kristallinen Präzipitationen, wie z.B. Li₇P₃S₁₁), LGPS (Li₁₀GeP₂S₁₂, Li₁₀SnP₂S₁₂, Li_{9.54}Si_{1.74}P_{1.44}S_{11.7}Cl_{0.3}, Li_{9.6}P₃S₁₂ und/oder Li₁₀XXP₂S₁₂ (mit Jod)) und/oder Argyrodit (Li₇PS₆, Li₆PS₅Cl, Li₆PS₅I und/oder Li₆PS₅Br) umfassen oder sein.

Gemäß einer Ausführungsform des Verfahrens weist die erste Separatorschicht eine Schichtdicke im Bereich von ca. 1 µm bis ca. 40 µm, insbesondere im Bereich von ca. 2 µm bis ca. 30 µm, vorzugsweise im Bereich von ca. 5 µm bis ca. 30 µm, auf, und die zweite Separatorschicht weist eine Schichtdicke im Bereich von ca. 0,2 µm bis ca. 5 µm auf. Vorteilhaft an diesem Verfahren ist, dass die erste Separatorschicht üblicherweise als mechanischer Träger bzw. Backbone der zweiten Separatorschicht dient bzw. dienen kann. Hierdurch kann die zweite Separatorschicht in der Regel besonders dünn ausgebildet werden. Die erste Separatorschicht kann im Allgemeinen flexibel bzw. biegbar ausgebildet werden.

Gemäß einer Ausführungsform des Verfahrens wird die zweite Separatorschicht mittels Lösungsabscheiden, einer aerosolbasierten Abscheidemethode ("kinetisches Kaltverdichten") oder durch einen vakuumbasierten Abscheideprozess erzeugt. Hierdurch kann die zweite Separatorschicht üblicherweise technisch einfach gebildet werden.

Gemäß einer Ausführungsform des Verfahrens wird die erste Separatorschicht mittels Foliengießen erzeugt. Ein Vorteil hiervon ist, dass die erste Separatorschicht im Allgemeinen technisch einfach und kostengünstig hergestellt werden kann. Dies senkt in der Regel die Herstellungskosten der Lithiumfestkörperbatterie.

Gemäß einer Ausführungsform des Verfahrens wird die zweite Separatorschicht zur Verbesserung der elektrochemischen Stabilität gegenüber der Lithiumanode mit Halogenidionen dotiert. Hierdurch wird im Allgemeinen die Langlebigkeit der Lithiumfestkörperbatterie verbessert, da ein Verschlechtern bzw. eine chemische Veränderung der zweiten Separatorschicht verhindert oder zumindest vermindert wird.

Es wird darauf hingewiesen, dass einige der möglichen Merkmale und Vorteile der Erfindung hierin mit Bezug auf unterschiedliche Ausführungsformen der Lithiumfestkörperbatterie bzw. des Verfahrens zum Herstellen einer Lithiumfestkörperbatterie beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

### Kurze Beschreibung der Zeichnung

Nachfolgend werden Ausführungsformen der Erfindung unter Bezugnahme auf die beigefügte Zeichnung beschrieben, wobei weder die Zeichnung noch die Beschreibung als die Erfindung einschränkend auszulegen sind.

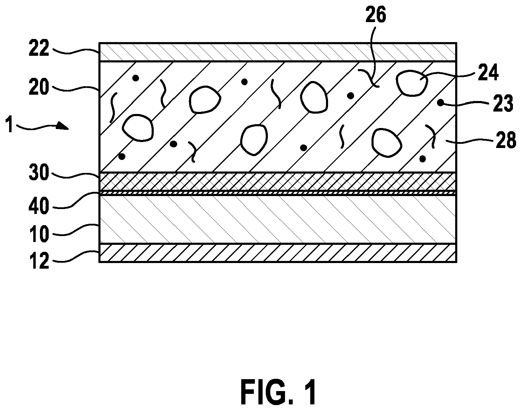

- Fig. 1 zeigt: eine Querschnittsansicht einer Lithiumfestkörperbatterie gemäß einer Ausführungsform der vorliegenden Erfindung.

Die Figur ist lediglich schematisch und nicht maßstabsgetreu. Gleiche Bezugszeichen bezeichnen in der Figur gleiche oder gleichwirkende Merkmale.

### Ausführungsformen der Erfindung

Fig. 1 zeigt eine Querschnittsansicht einer Lithiumfestkörperbatterie 1 gemäß einer Ausführungsform der vorliegenden Erfindung.

Die wiederaufladbare Lithiumfestkörperbatterie 1 (sekundäre Batterie) umfasst eine Lithiumanode 10 und eine Kathode 20.

Die Lithiumanode 10 kann eine Folie aus reinem Lithium umfassen, Lithium auf einem Metallsubstrat (wie z.B. Kupfer, Nickel oder eine Kombination hiervon) umfassen oder eine Lithiumlegierung (z.B. LiMg) umfassen.

Die Kathode 20 kann einen sulfidischen bzw. schwefelbasierten Festkörperelektrolyt 28 und ein aktives Kathodenmaterial 24 aufweisen, das in dem Festkörperelektrolyt 28 angeordnet ist. Das aktive Kathodenmaterial 24 kann kornförmig (polykristallin oder einkristallin) in einem Binder 23 der Kathode 20 eingebettet sein. Das aktive Kathodenmaterial 24 kann eine (äußere) Beschichtung aufweisen, um der Widerstand am Übergang von dem aktiven Kathodenmaterial 24 zu dem Binder 23 zu vermindern. Die Beschichtung kann z.B. LiNbO₃ umfassen oder sein. Vorstellbar ist jedoch auch, dass das aktive Kathodenmaterial 24 keine (äußere) Beschichtung aufweist. Die Kathode 20 kann einen leitenden Zusatz bzw. ein leitendes Additiv 26, wie z.B. eine Kohlenstoffverbindung (C-compound) umfassen.

Auf einer ersten Seite der Kathode 20 (in Fig. 1 oberhalb der Kathode 20) ist ein Kathodenstromkollektor 22 in Form einer Schicht angeordnet, der mit einem Pluspol der Lithiumfestkörperbatterie 1 elektrisch verbunden ist. Auf der der ersten Seite abgewandten zweiten Seite der Kathode 20 (in Fig. 1 unterhalb der Kathode 20) ist eine erste Separatorschicht 30 angeordnet. Die erste Separatorschicht 30 befindet sich in unmittelbarem bzw. direktem Kontakt mit der Kathode 20. Die erste Separatorschicht 30 kann porös ausgebildet sein. Insbesondere kann die Porosität der ersten Separatorschicht 30 im Bereich von ca. 5% bis ca. 20%, insbesondere im Bereich von ca. 5% bis ca. 10%, liegen.

Die erste Separatorschicht 30 kann einen Volumenprozentsatz von ca. 0,5% bis ca. 10%, insbesondere ca. 3%, an Binder 23 bzw. Bindermaterial aufweisen. Die erste Separatorschicht 30 kann einen sulfidischen Festkörperelektrolyt umfassen.

Die erste Separatorschicht 30 weist eine Schichtdicke von ca. 2 µm bis ca. 30 µm, insbesondere ca. 5 µm bis ca. 20 µm, vorzugsweise ca. 10 µm bis ca. 15 µm, auf. Die erste Separatorschicht 30 weist eine größere Schichtdicke als die zweite Separatorschicht 40 auf.

Die erste Separatorschicht 30 kann als mechanisches Rückgrat für die zweite Separatorschicht 40 aufweisen. Aufgrund des Binders bzw. Bindermaterials kann die erste Separatorschicht 30 teilweise flexibel bzw. biegsam ausgebildet sein.

Die erste Separatorschicht 30 kann kristallin oder amorph ausgebildet sein. Auch ist es möglich, dass die erste Separatorschicht 30 eine Mischung aus kristallin und amorph ist oder in manchen Bereichen kristallin und in manchen Bereichen amorph ausgebildet ist.

Die erste Separatorschicht 30 kann Korngrenzen aufweisen. Die erste Separatorschicht 30 kann durch Foliengießen (convential tape casting method) erzeugt werden.

Die zweite Separatorschicht 40 kann einen sulfidischen Festkörperelektrolyt umfassen. Die zweite Separatorschicht 40 befindet sich in direktem bzw. unmittelbarem Kontakt mit der Lithiumanode 10. Auf der der Lithiumanode 10 gegenüberliegenden Seite der zweiten Separatorschicht 40 befindet sich die zweite Separatorschicht 40 in direktem bzw. unmittelbarem Kontakt mit der ersten Separatorschicht 30.

Die zweite Separatorschicht 40 kann im Wesentlichen keine Poren bzw. keine Hohlräume aufweisen. Die Porosität der zweiten Separatorschicht 40 kann im Bereich von ca. 0% bis ca. 3%, insbesondere in einem Bereich von ca. 0% bis ca. 1%, liegen. Auch eine Porosität im Bereich von ca. 0% bis ca. 2% ist vorstellbar. Ebenfalls ist der Bereich von ca. 0,1% bis ca. 1,5% vorstellbar.

Die Porosität der zweiten Separatorschicht 40 (auch zweite Trennschicht genannt) ist (deutlich) niedriger als die Porosität der ersten Separatorschicht 30 (auch erste Trennschicht genannt). Insbesondere kann die Porosität der ersten Separatorschicht 30 im Bereich von ca. 10% oder ca. 5% liegen. Beispielsweise liegt die Porosität der ersten Separatorschicht 30 in einem Bereich von ca. 5% bis ca. 7%. Auch eine Porosität der ersten Separatorschicht 30 in einem Bereich von ca. 7% bis ca. 10% ist vorstellbar.

Das Verhältnis der Porosität der zweiten Separatorschicht 40 zur Porosität der ersten Separatorschicht 30 kann z.B. in einem Bereich von ca. 0,01 bis ca. 0,5, insbesondere in einem Bereich von ca. 0,1 bis ca. 0,3, vorzugsweise in einem Bereich von ca. 0,1 bis ca. 0,2, z.B. ca. 0,15 betragen. Vorstellbar ist auch, dass das Verhältnis (unabhängig von der Porosität der ersten Separatorschicht 30) im Wesentlichen Null beträgt, da die Porosität der zweiten Separatorschicht 40 im Wesentlichen Null ist.

Die Porosität kann insbesondere ein Verhältnis von dem Hohlraumvolumen und zu dem Gesamtvolumen sein: Hohlraumvolumen/Gesamtvolumen

Die zweite Separatorschicht 40 bzw. der sulfidische Festkörperelektrolyt der zweiten Separatorschicht kann mit Halogenidionen dotiert sein. Hierdurch kann die elektrochemische Stabilität und der Grenzflächenwiderstand gegenüber der Lithiumanode 10 verbessert werden. Die Dotierung kann insbesondere in einem Bereich liegen, dass ein Argyrodit vorhanden ist bzw. entsteht. Insbesondere kann die zweite Separatorschicht Li₇PS₆, Li₆PS₅Cl, Li₆PS₅I und/oder Li₆PS₅Br umfassen oder sein. Das Argyrodit, das LGPS oder die Glaskeramik kann eine Leitfähigkeit im Bereich von ca. 10⁻³ S/cm bis ca. 10⁻² S/cm bei Raumtemperatur aufweisen. Das Glas kann eine Leitfähigkeit im Bereich von ca. 10⁻⁴ S/cm bis ca. 10⁻³ S/cm bei Raumtemperatur aufweisen

Die Schichtdicke, d.h. die Dicke in Richtung von oben nach unten in Fig. 1, der zweiten Separatorschicht 40 kann in einem Bereich von ca. 0,2 µm bis ca. 5 µm liegen. Die zweite Separatorschicht 40 ist (deutlich) dünner als die erste Separatorschicht 30.

Das Verhältnis der Schichtdicken zwischen der zweiten Separatorschicht 40 und der ersten Separatorschicht 30, d.h. Schichtdicke der zweiten Separatorschicht 40/Schichtdicke der ersten Separatorschicht 30, kann in einem Bereich von ca. 0,01 bis ca. 0,3, insbesondere in einem Bereich von ca. 0,01 bis ca. 0,2, vorzugsweise in einem Bereich von ca. 0,02 bis ca. 0,4 betragen. Z.B. kann das Verhältnis der Schichtdicken ca. 0,09 bis ca. 0,15 betragen.

Der Begriff "ca." kann insbesondere eine Abweichung von ± 5%, vorzugsweise ± 2%, des jeweils angegebenen Werts betragen.

Die zweite Separatorschicht 40 kann kristallin sein. Alternativ ist auch vorstellbar, dass die zweite Separatorschicht 40 amorph ausgebildet ist. Auch eine Mischung dieser beiden Formen, insbesondere dass Teilbereiche der zweiten Separatorschicht 40 kristallin und Teilbereiche der zweiten Separatorschicht 40 amorph sind, ist vorstellbar.

Die zweite Separatorschicht 40 kann durch ein Lösungsabscheiden oder durch einen vakuumbasierten Abscheideprozess (z.B. chemical vapour deposition) oder ADM (aerosolbasierte Kaltabscheidung) gebildet werden. Bei der aerosolbasierten Kaltabscheidung werden Partikel in Suspension beschleunigt und unter hohen Drücken auf ein Substrat gesprüht, sodass sich eine dichte Schicht ergibt.

Die zweite Separatorschicht 40 verhindert aufgrund der geringen Porosität der zweiten Separatorschicht 40 das Bilden bzw. Eindringen von Lithium-Dendriten in die zweite Separatorschicht 40 und somit auch das Eindringen von Dendriten in die erste Separatorschicht 30, auch bei hohen Ladedichten. Hierdurch wird ein Kurzschluss der Lithiumfestkörperbatterie 1 verhindert bzw. die Lebensdauer der Lithiumfestkörperbatterie 1 erhöht.

Das Bilden der zweiten Separatorschicht 40 ist üblicherweise aufwendiger als das Bilden der ersten Separatorschicht 30. Dadurch dass die zweite Separatorschicht 40, die das Eindringen bzw. Bilden von Dendriten verhindert, (deutlich) dünner als die erste Separatorschicht 30 ausgebildet ist bzw. wird, kann die summierte Schichtdicke der ersten Separatorschicht 30 und der zweiten Separatorschicht 40 sehr groß sein und die Separatorschichten 30, 40 und folglich die Lithiumfestkörperbatterie 1 können dennoch schnell und kostengünstig hergestellt werden. Folglich kann technisch einfach, schnell und kostengünstig eine Lithiumfestkörperbatterie 1 hergestellt werden, bei der ein Dendritenwachstum sicher verhindert ist bzw. stark vermindert ist.

Auf der der zweiten Separatorschicht 40 abgewandten Seite der Lithiumanode 10 kann ein Lithiumanodenstromkollektor 12 in Form einer Schicht angeordnet sein, der mit. Der Lithiumanodenstromkollektor 12 ist mit dem Minuspol der Lithiumfestkörperbatterie 1 verbunden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Lithiumfestkörperbatterie (1) umfassend
eine Lithiumanode (10),
eine Kathode (20),
eine erste Separatorschicht (30) zum elektrischen Trennen der Lithiumanode (10) von der Kathode (20), wobei die erste Separatorschicht (30) einen sulfidischen Festkörperelektrolyt umfasst, und
eine zweite Separatorschicht (40) zum elektrischen Trennen der Lithiumanode (10) von der Kathode (20), wobei die die zweite Separatorschicht (40) zwischen der ersten Separatorschicht (30) und der Lithiumanode (10) angeordnet ist und die zweite Separatorschicht (40) einen sulfidischen Festkörperelektrolyt umfasst,
wobei die erste Separatorschicht (30) zwischen der Kathode (20) und der zweiten Separatorschicht (40) angeordnet ist und eine größere Schichtdicke als die zweite Separatorschicht (40) aufweist, insbesondere die erste Separatorschicht (30) eine mindestens doppelt so große Schichtdicke wie die zweite Separatorschicht (40) aufweist, vorzugsweise die erste Separatorschicht (30) eine mindestens zehnmal so große Schichtdicke wie die zweite Separatorschicht (40) aufweist,
wobei die Porosität der zweiten Separatorschicht (40) in einem Bereich von ca. 0% bis ca. 4%, vorzugsweise in einem Bereich von ca. 0% bis ca. 3%, besonders vorzugsweise in einem Bereich von ca. 0% bis ca. 1%, liegt.

2. Lithiumfestkörperbatterie (1) nach Anspruch 1, wobei die erste Separatorschicht (30) eine Schichtdicke im Bereich von ca. 1 µm bis ca. 40 µm, insbesondere im Bereich von ca. 2 µm bis ca. 30 µm, vorzugsweise im Bereich von ca. 5 µm bis ca. 30 µm, aufweist,
und
wobei die zweite Separatorschicht (40) eine Schichtdicke im Bereich von ca. 0,2 µm bis ca. 5 µm aufweist.

3. Lithiumfestkörperbatterie (1) nach Anspruch 1 oder 2, wobei die erste Separatorschicht (30) eine Porosität im Bereich von ca. 5% bis ca. 20%, insbesondere im Bereich von ca. 5% bis ca. 10%, aufweist.

4. Lithiumfestkörperbatterie (1) nach einem der vorhergehenden Ansprüche, wobei
die zweite Separatorschicht (40) zur Verbesserung der elektrochemischen Stabilität gegenüber der Lithiumanode (10) mit Halogenidionen dotiert ist.

5. Lithiumfestkörperbatterie (1) nach einem der vorhergehenden Ansprüche, wobei
die Kathode (20) einen sulfidischen Festkörperelektrolyt (28) umfasst.

6. Verfahren zum Herstellen einer Lithiumfestkörperbatterie (1), wobei das Verfahren folgende Schritte umfasst:
- Bereitstellen einer Lithiumanode (10);
- Bereitstellen einer Kathode (20);
- Anordnen einer ersten Separatorschicht (30) zum elektrischen Trennen der Lithiumanode (10) von der Kathode (20) derart, dass die erste Separatorschicht (30) bei der fertig hergestellten Lithiumfestkörperbatterie (1) zwischen der Lithiumanode (10) und der Kathode (20) angeordnet ist, wobei die erste Separatorschicht (30) einen sulfidischen Festkörperelektrolyt umfasst;
und
- Anordnen einer zweiten Separatorschicht (40) zum elektrischen Trennen der Lithiumanode (10) von der Kathode (20) derart, dass die die zweite Separatorschicht (40) bei der fertig hergestellten Lithiumfestkörperbatterie (1) zwischen der ersten Separatorschicht (30) und der Lithiumanode (10) angeordnet ist, wobei die zweite Separatorschicht (40) einen sulfidischen Festkörperelektrolyt umfasst,
wobei die erste Separatorschicht (30) eine größere Schichtdicke als die zweite Separatorschicht (40) aufweist, insbesondere die erste Separatorschicht (30) eine mindestens doppelt so große Schichtdicke wie die zweite Separatorschicht (40) aufweist, vorzugsweise die erste Separatorschicht (30) eine mindestens zehnmal so große Schichtdicke wie die zweite Separatorschicht (40) aufweist,
wobei die Porosität der zweiten Separatorschicht (40) in einem Bereich von ca. 0% bis ca. 4%, vorzugsweise in einem Bereich von ca. 0% bis ca. 3%, besonders vorzugsweise in einem Bereich von ca. 0% bis ca. 1%, liegt.

7. Verfahren nach Anspruch 6, wobei
die erste Separatorschicht (30) eine Schichtdicke im Bereich von ca. 1 µm bis ca. 40 µm, insbesondere im Bereich von ca. 2 µm bis ca. 30 µm, vorzugsweise im Bereich von ca. 5 µm bis ca. 30 µm, aufweist, und
wobei die zweite Separatorschicht (40) eine Schichtdicke im Bereich von ca. 0,2 µm bis ca. 5 µm aufweist.

8. Verfahren nach Anspruch 6 oder 7, wobei
die zweite Separatorschicht (40) mittels Lösungsabscheiden, einer aerosolbasierten Abscheidemethode oder durch einen vakuumbasierten Abscheideprozess erzeugt wird.

9. Verfahren nach einem der Ansprüche 6-8, wobei die erste Separatorschicht (30) mittels Foliengießen erzeugt wird.

10. Verfahren nach einem der Ansprüche 6-9, wobei die zweite Separatorschicht (40) zur Verbesserung der elektrochemischen Stabilität gegenüber der Lithiumanode (10) mit Halogenidionen dotiert wird.

## Claims

1. Solid-state lithium battery (1) comprising
a lithium anode (10),
a cathode (20),
a first separator layer (30) for electrically separating the lithium anode (10) from the cathode (20), wherein the first separator layer (30) comprises a sulfidic solid electrolyte, and
a second separator layer (40) for electrically separating the lithium anode (10) from the cathode (20), wherein the second separator layer (40) is arranged between the first separator layer (30) and the lithium anode (10) and the second separator layer (40) comprises a sulfidic solid electrolyte, wherein the first separator layer (30) is arranged between the cathode (20) and the second separator layer (40) and has a layer thickness greater than that of the second separator layer (40), in particular the first separator layer (30) has a layer thickness which is at least twice that of the second separator layer (40), preferably the first separator layer (30) has a layer thickness which is at least ten times that of the second separator layer (40),
wherein the porosity of the second separator layer (40) is in the range from about 0% to about 4%, preferably in the range from about 0% to about 3%, particularly preferably in the range from about 0% to about 1%.

2. Solid-state lithium battery (1) according to Claim 1, wherein
the first separator layer (30) has a layer thickness in the range from about 1 µm to about 40 µm, in particular in the range from about 2 µm to about 30 µm, preferably in the range from about 5 µm to about 30 µm, and
wherein the second separator layer (40) has a layer thickness in the range from about 0.2 µm to about 5 µm.

3. Solid-state lithium battery (1) according to Claim 1 or 2, wherein
the first separator layer (30) has a porosity in the range from about 5% to about 20%, in particular in the range from about 5% to about 10%.

4. Solid-state lithium battery (1) according to any of the preceding claims, wherein
the second separator layer (40) is doped with halide ions to improve the electrochemical stability to the lithium anode (10).

5. Solid-state lithium battery (1) according to any of the preceding claims, wherein
the cathode (20) comprises a sulfidic solid electrolyte (28).

6. Process for producing a solid-state lithium battery (1), wherein the process comprises the following steps:
- provision of a lithium anode (10);
- provision of a cathode (20);
- arrangement of a first separator layer (30) for electrically separating the lithium anode (10) from the cathode (20) in such a way that the first separator layer (30) is arranged between the lithium anode (10) and the cathode (20) in the finished solid-state lithium battery (1), wherein the first separator layer (30) comprises a sulfidic solid electrolyte;
and
- arrangement of a second separator layer (40) for electrically separating the lithium anode (10) from the cathode (20) in such a way that the second separator layer (40) is arranged between the first separator layer (30) and the lithium anode (10) in the finished solid-state lithium battery (1), wherein the second separator layer (40) comprises a sulfidic solid electrolyte,
wherein the first separator layer (30) has a layer thickness greater than that of the second separator layer (40), in particular the first separator layer (30) has a layer thickness which is at least twice that of the second separator layer (40), preferably the first separator layer (30) has a layer thickness which is at least ten times that of the second separator layer (40),
wherein the porosity of the second separator layer (40) is in the range from about 0% to about 4%, preferably in the range from about 0% to about 3%, particularly preferably in the range from about 0% to about 1%.

7. Process according to Claim 6, wherein
the first separator layer (30) has a layer thickness in the range from about 1 µm to about 40 µm, in particular in the range from about 2 µm to about 30 µm, preferably in the range from about 5 µm to about 30 µm, and
wherein the second separator layer (40) has a layer thickness in the range from about 0.2 µm to about 5 µm.

8. Process according to Claim 6 or 7, wherein the second separator layer (40) is produced by solution deposition, an aerosol-based deposition method or by a vacuum-based deposition process.

9. Process according to any of Claims 6-8, wherein the first separator layer (30) is produced by tape casting.

10. Process according to any of Claims 6-9, wherein the second separator layer (40) is doped with halide ions to improve the electrochemical stability to the lithium anode (10).

## Revendications

1. Batterie au lithium et à électrolyte solide (1) comprenant
une anode au lithium (10),
une cathode (20),
une première couche de séparation (30) destinée à séparer électriquement l'anode de lithium (10) de la cathode (20), la première couche de séparation (30) comprenant un électrolyte solide sulfuré, et
une deuxième couche de séparation (40) destinée à séparer électriquement l'anode de lithium (10) de la cathode (20), la deuxième couche de séparation (40) étant disposée entre la première couche de séparation (30) et l'anode de lithium (10) et la deuxième couche de séparation (40) comprenant un électrolyte solide sulfuré,
la première couche de séparation (30) étant disposée entre la cathode (20) et la deuxième couche de séparation (40) et ayant une épaisseur de couche supérieure à celle de la deuxième couche de séparation (40), en particulier la première couche de séparation (30) étant au moins deux fois plus épaisse que la deuxième couche de séparation (40), de préférence la première couche de séparation (30) étant au moins dix fois plus épaisse que la deuxième couche de séparation (40),
la porosité de la deuxième couche de séparation (40) étant dans une gamme allant d'environ 0 % à environ 4 %, de préférence dans une gamme allant d'environ 0 % à environ 3 %, de manière particulièrement préférée dans une gamme allant d'environ 0 % à environ 1 %.

2. Batterie au lithium et à électrolyte solide (1) selon la revendication 1,
la première couche de séparation (30) ayant une épaisseur de couche dans la gamme allant d'environ 1 µm à environ 40 µm, en particulier dans la gamme allant d'environ 2 µm à environ 30 µm, de préférence dans la gamme allant d'environ 5 µm à environ 30 µm, et
la deuxième couche de séparation (40) ayant une épaisseur de couche dans la gamme allant d'environ 0,2 µm à environ 5 µm.

3. Batterie au lithium et à électrolyte solide (1) selon la revendication 1 ou 2,
la première couche de séparation (30) ayant une porosité dans la gamme allant d'environ 5 % à environ 20 %, en particulier dans la gamme allant d'environ 5 % à environ 10 %.

4. Batterie au lithium et à électrolyte solide (1) selon l'une des revendications précédentes,
la deuxième couche de séparation (40) étant dopée avec des ions halogénures pour améliorer la stabilité électrochimique par rapport à l'anode de lithium (10).

5. Batterie au lithium et à électrolyte solide (1) selon l'une des revendications précédentes,
la cathode (20) comprenant un électrolyte solide sulfuré (28).

6. Procédé de fabrication d'une batterie au lithium et à électrolyte solide (1), le procédé comprenant les étapes suivantes :
- fournir une anode de lithium (10) ;
- fournir une cathode (20) ;
- disposer une première couche de séparation (30) destinée à séparer électriquement l'anode de lithium (10) de la cathode (20) de façon à disposer dans la batterie au lithium et à électrolyte solide (1), une fois la fabrication terminée, la première couche de séparation (30) entre l'anode de lithium (10) et la cathode (20), la première couche de séparation (30) comprenant un électrolyte solide sulfuré ;
et
- disposer une deuxième couche de séparation (40) destinée à séparer électriquement l'anode de lithium (10) de la cathode (20) de façon à disposer dans la batterie au lithium et à électrolyte solide (1), une fois la fabrication terminée, la deuxième couche de séparation (40) entre la première couche de séparation (30) et l'anode de lithium (10), la deuxième couche de séparation (40) comprenant un électrolyte solide sulfuré,
la première couche de séparation (30) ayant une épaisseur de couche supérieure à celle de la deuxième couche de séparation (40), en particulier la première couche de séparation (30) étant au moins deux fois plus épaisse que la deuxième couche de séparation (40), de préférence la première couche de séparation (30) étant au moins dix fois plus épaisse que la deuxième couche de séparation (40),
la porosité de la deuxième couche de séparation (40) étant dans une gamme allant d'environ 0 % à environ 4 %, de préférence dans une gamme allant d'environ 0 % à environ 3 %, de manière particulièrement préférée dans une gamme allant d'environ 0 % à environ 1 %.

7. Procédé selon la revendication 6,
la première couche de séparation (30) ayant une épaisseur de couche dans la gamme allant d'environ 1 µm à environ 40 µm, en particulier dans la gamme allant d'environ 2 µm à environ 30 µm, de préférence dans la gamme allant d'environ 5 µm à environ 30 µm, et
la deuxième couche de séparation (40) ayant une épaisseur de couche dans la gamme allant d'environ 0,2 µm à environ 5 µm.

8. Procédé selon la revendication 6 ou 7,
la deuxième couche de séparation (40) étant générée par un dépôt de solution, un procédé de dépôt par aérosol ou un procédé de dépôt sous vide.

9. Procédé selon l'une des revendications 6 à 8,
la première couche de séparation (30) étant générée par coulée de film.

10. Procédé selon l'une des revendications 6 à 9,
la deuxième couche de séparation (40) étant dopée avec des ions halogénures pour améliorer la stabilité électrochimique par rapport à l'anode de lithium (10).
